(19) Europäisches Patentamt
European Patent Office
Office européen des brevets

(11) **EP 2 001 711 B1**

(12) **EUROPÄISCHE PATENTSCHRIFT**

(45) Veröffentlichungstag und Bekanntmachung des Hinweises auf die Patenterteilung:
**04.11.2009 Patentblatt 2009/45**

(21) Anmeldenummer: 07704581.3

(22) Anmeldetag: **14.02.2007**

(51) Int Cl.:
*B60R 16/02* *(2006.01)*   *B60R 16/08* *(2006.01)*
*B60T 8/173* *(2006.01)*   *B60T 8/36* *(2006.01)*
*B60T 8/88* *(2006.01)*   *F16H 61/00* *(2006.01)*
*B60R 16/03* *(2006.01)*

(86) Internationale Anmeldenummer:
**PCT/EP2007/051446**

(87) Internationale Veröffentlichungsnummer:
**WO 2007/110273 (04.10.2007 Gazette 2007/40)**

(54) **STEUERGERÄT ZUR BORDNETZSPANNUNGSWELLIGKEIT- ROBUSTEN REGELUNG DES ELEKTRISCHEN STROMS EINES REGELMAGNETVENTILS SOWIE ZUGEHÖRIGES VERFAHREN**

CONTROL UNIT FOR CONTROLLING THE ELECTRIC CURRENT OF A CONTROL MAGNET VALVE IN A WAY WHICH IS ROBUST WITH RESPECT TO VOLTAGE RIPPLE OF A VEHICLE ON-BOARD POWER SYSTEM AND ASSOCIATED METHOD

APPAREIL DE COMMANDE POUR RÉGULATION ROBUSTE DE L'ONDULATION DE TENSION D'UN RÉSEAU DE BORD DU COURANT ÉLECTRIQUE D'UNE SOUPAPE MAGNÉTIQUE DE RÉGULATION ET PROCÉDÉ ASSOCIÉ

(84) Benannte Vertragsstaaten:
**DE FR IT**

(30) Priorität: **28.03.2006 DE 102006014352**

(43) Veröffentlichungstag der Anmeldung:
**17.12.2008 Patentblatt 2008/51**

(73) Patentinhaber: **Continental Automotive GmbH 30165 Hannover (DE)**

(72) Erfinder:
• **AIGNER, Christian**
  **84137 Vilsbiburg (DE)**
• **LEHNER, Oliver**
  **93176 Beratzhausen (DE)**
• **VOGEL, Mike**
  **93049 Regensburg (DE)**

(56) Entgegenhaltungen:
**EP-A- 1 229 273      DE-A1- 19 937 053**
**US-A1- 2005 117 265**

## Beschreibung

Die Erfindung betrifft, wie aus dem Dokument EP 1 229 273 A bekannt, ein Kraftfahrzeug-Steuergerät mit einem digitalen Regelkreis zur Bordnetzwelligkeit- robusten Regelung des elektrischen Stroms eines Regelmagnetventils für eine Kraftfährzeug- Hydraulikvorrichtung bei gleichzeitig verbessertem Dynamikverhalten auf Sollwertsprünge des Sollwertstroms als Führungsgröße des Regelkreises.

Zum Beispiel bei Automatikgetrieben in Kraftfahrzeugen werden als Hydraulikvorrichtungen diverse Kupplungen und/oder Bremsen zur Gangauswahl sowie zur Realisierung von Schaltübergängen hydraulisch betätigt. Insbesondere kommen in Kraftfahrzeugen hydraulisch betätigte Kupplungen und/oder Bremsen zum Koppeln oder Festhalten von Wellen zum Einsatz. Die hydraulische Betätigung erfolgt dabei in der Weise, dass der Durchfluss und damit der Hydraulikdruck des Hydraulikmediums in diesen Kupplungen und Bremsen durch sogenannte Regelmagnetventile mit zugeordneten digitalen Regelkreisen eingestellt werden. Der Durchlass des jeweiligen Regelmagnetventils ist vom elektrischen Spulenstrom, der durch das Ventil fließt, abhängig und wird durch einen Stromregler eingeregelt. Dazu ist im Rückkoppelzweig des jeweiligen Regelkreises ein Messglied bzw. ein Sensor vorgesehen, mit dessen Hilfe der Ist-Strom durch das Regelmagnetventil ermittelt und dem Eingang des digitalen Reglers, insbesondere PID-Reglers, zugeführt wird. Aufgrund des vorbekannten Kennlinienfeldes des Regelmagnetsventils lässt sich vom gemessenen elektrischen Strom durch das Regelmagnetventil auf den Hydraulikdruck des Hydraulikmediums schließen.

In der Praxis kann die Bordnetzspannung bzw. Versorgungsspannung des jeweiligen Kraftfahrzeugs instabil sein. Insbesondere kann sie durch verschiedene Faktoren beeinflusst sogar bis zu einigen Volt schwanken. Diese Schwankungen der Bordnetz- Versorgungsspannung können sich auch auf den elektrischen Strom übertragen, der durch das jeweilige Regelmagnetventil fließt, so dass es zu einer Beaufschlagung der Regelgröße dessen Regelkreises mit Störungen kommt. Insbesondere wenn die Störungen periodisch sind, kann es bei ungünstigen Frequenzen der Störungen (Resonanzfrequenzen) zu einem unerwünschten Schwingen oder gar Aufschwingen des Ist-Stroms, d.h. der ausgangsseitigen Regelgröße des Stromreglers des Regelkreises kommen. Dem könnte durch ein langsames Filter, d.h. ein Filter mit großer Filterzeit, im Rückkoppelzweig des digitalen Regelkreises entgegengewirkt werden. Dies hätte allerdings zur Folge, dass auch der digitale Regler selbst träger bzw. langsamer wird. Ein träges Verhalten des Reglers ist allerdings in der Praxis unerwünscht. Denn zum Beispiel bei Automatikgetrieben ist insbesondere während Schaltungen, die mit einem sprungartigen Sollwertstromverlauf einhergehen, ein schnelles Ansprechen des Reglers gefordert.

Der Erfindung liegt die Aufgabe zu Grunde, zur verbesserten Einstellung des elektrischen Stroms eines Regelmagnetventils für eine Kraftfahrzeug-Hydraulikvorrichtung ein Kraftfahrzeug-Steuergerät mit einem digitalen bzw. diskreten Regelkreis bereitzustellen, der gegenüber Bordnetzspannungs-Welligkeiten weitgehend robust ist und gleichzeitig ein ausreichend hohes Dynamikverhalten zum schnellen Ausregeln von gewollten Sprüngen im Sollwertstromverlauf des Regelmagnetventils aufweist.

Diese Aufgabe wird bei einem Kraftfahrzeug-Steuergerät der eingangs genannten Art dadurch gelöst, dass im Rückkoppelzweig des digitalen Regelkreises mindestens ein adaptives Korrekturfilter vorgesehen ist, dessen Filterzeit aufgrund der Pegeländerung des Sollwertstroms dynamisch einstellbar ist.

Dadurch, dass die Filterzeit des mindestens einen Filters im Rückkoppelzweig des digitalen bzw. diskreten Regelkreises für das Regelmagnetventil in Abhängigkeit von der Pegeldynamik bzw. Pegeländerung des gewünschten Sollwertstroms für das Regelmagnetventil schaltbar ist, kann der Regelkreis zum einen auf einen gewünschten Sprung des Sollwertstroms mit hoher Dynamik, d.h. schnellem Ausregelverhalten reagieren. Zum anderen bleibt er im statischen Zustand, d.h. bei geringen Pegeländerungen des Sollwertstroms, weitgehend stabil bzw. robust gegenüber Bordnetzspannungs-Welligkeiten.

Das erfindungsgemäße Steuergerät eignet sich insbesondere als Getriebesteuerung für Automatikgetriebe mit hohen Komfortansprüchen an die Ausführgeschwindigkeit von gewünschten Schaltvorgängen bei gleichzeitig hohen Ansprüchen an die Unempfindlichkeit gegenüber hohen Bordnetzschwankungen.

Die Erfindung betrifft auch ein Verfahren zur Reduzierung des Einflusses von Bordnetzspannungs-Welligkeiten auf die Regelung des elektrischen Stroms eines Regelmagnetventils im digitalen Regelkreis eines Steuergeräts für eine Kraftfahrzeug-Hydraulikvorrichtung bei gleichzeitig verbessertem Dynamikverhalten auf Sollwertsprünge des Sollwertstroms als Führungsgröße des Regelkreises, welches dadurch gekennzeichnet ist, dass im Rückkoppelzweig des digitalen Regelkreises die Filterzeit mindestens eines adaptiven Korrekturfilters aufgrund der Pegeländerung des Sollwertstroms dynamisch eingestellt wird.

Sonstige Weiterbildungen der Erfindung sind in den Unteransprüchen wiedergegeben.

Die Erfindung und ihre Weiterbildungen werden nachfolgend anhand von Zeichnungen näher erläutert.

Es zeigen:

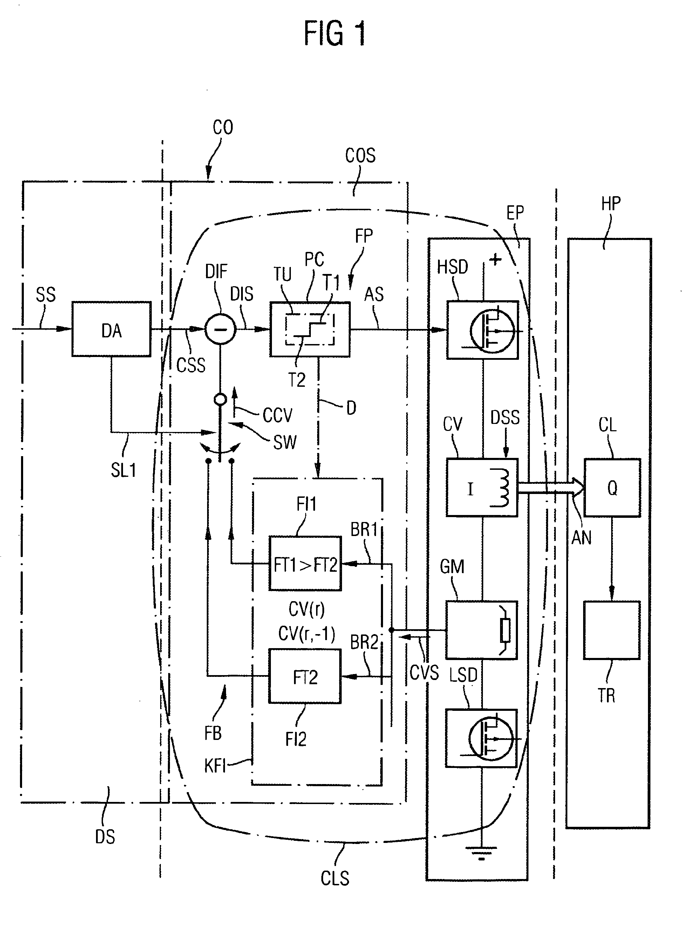

Figur 1   in schematischer Darstellung eine Getriebesteuerung als Ausführungsbeispiel eines erfindungsgemäßen Kraftfahrzeug-Steuergeräts mit einem digitalen Regelkreis zur Einstellung des elektrischen Spulenstroms des Regelmagnetventils einer Kraftfahrzeug-Hydraulikvorrichtung,

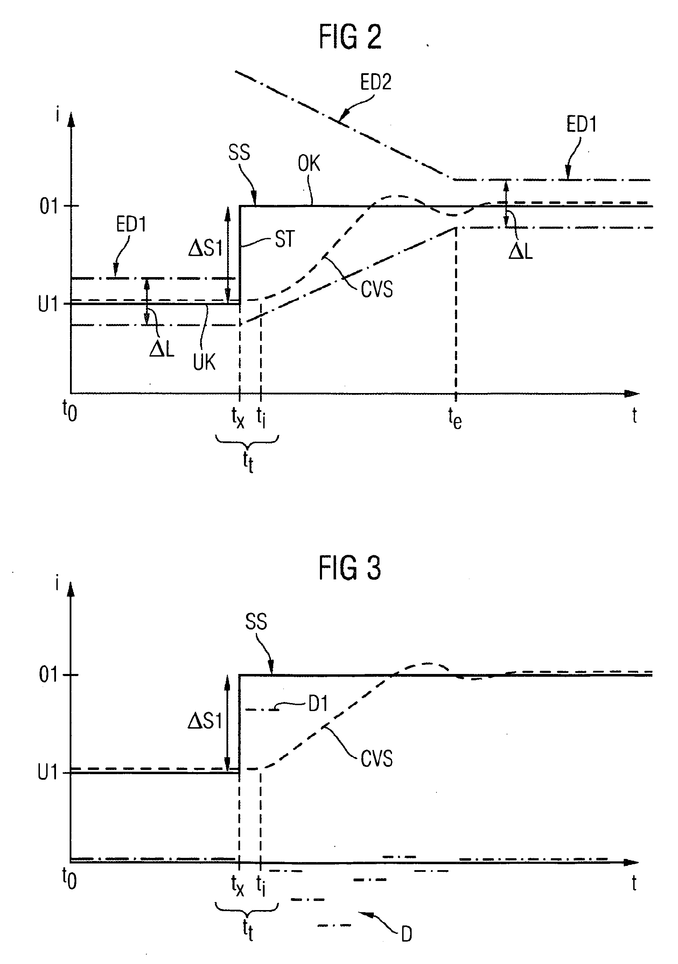

Figur 2    anhand eines beispielhaften Stromdiagramms die Regelverhältnisse im digitalem Regelkreis der Getriebesteuerung von Figur 1, wenn in dessen Rückkoppelzweig ein schnelles und ein langsames Korrekturfilter dynamisch in Abhängigkeit der Pegeländerung des Sollwertsstroms für das Regelmagnetventil geschaltet werden, und

Figur 3    anhand eines weiteren beispielhaften Stromdiagramms die Regelverhältnisse im digitalen Regelkreis der Getriebesteuerung von Figur 1, wenn in dessen Rückkoppelzweig ein Korrekturfilter in Abhängigkeit vom D-Anteil der ausgegebenen Stellgröße des digitalen Reglers im Regelkreis geschaltet wird.

Elemente mit gleicher Funktion und Wirkungsweise sind in den Figuren 1 mit 3 jeweils mit denselben Bezugszeichen versehen.

Figur 1 zeigt in schematischer Darstellung beispielhaft eine Getriebesteuerung CO als Steuergerät, die der Einstellung des Volumenstroms Q eines Hydraulikmediums, insbesondere einer Hydraulikflüssigkeit wie zum Beispiel Hydrauliköl, in einer Kraftfahrzeug-Hydraulikvorrichtung HP mittels eines elektrischen Stellglieds bzw. Aktuators EP dient. Die Getriebesteuerung CO ist vorzugsweise als Automatikgetriebesteuergerät für ein Automatikgetriebe ausgebildet. Das elektrische Stellglied bzw. der Aktuator EP weist als Hauptkomponente ein Regelmagnetventil CV zwischen seiner hochpotentialigen Treiberstufe HSD und seiner niederpotentialigen Treiberstufe LSD auf. Durch Einstellung des Spulenstroms I des Regelmagnetventils CV taucht dessen Anker AN in einem Stellzylinder verschieden tief in den Volumenstrom Q der Hydraulikvorrichtung HP ein. Der zeichnerischen Einfachheit halber ist der Anker AN in der Figur 1 lediglich durch einen Pfeil angedeutet. Die Hydraulikvorrichtung HP ist in der Praxis durch mindestens eine Kupplung CL und/oder durch mindestens eine Hydraulikbremse gebildet. Die Kupplung CL bzw. die Hydraulikbremse steht mit einem Getriebe TR des Kraftfahrzeugs in Wirkverbindung. Dem Spulenstrom I des Regelmagnetventils CV ist über dessen Kennlinienfeld ein bestimmter Hydraulikdruck des Volumenstroms Q in der Hydraulikvorrichtung HP zugeordnet.

Um den Spulenstrom I des Regelmagnetventils CV auf einen bestimmten zeitlichen Sollstromverlauf möglichst präzise und schnell einzuregeln, d.h. äquivalent dazu ausgedrückt einen gewünschten zeitlichen Druckverlauf des Volumenstroms Q in der Hydraulikvorrichtung HP korrespondierend zum Spulenstrom I zu erzeugen, weist die Getriebesteuerung CO einen dynamischen, digitalen Regler PC, insbesondere PID-Regler, im Vorwärtszweig FP ihres digitalen Regelkreises CLS auf. Der Regler CV gibt ein Stellgrößensignal AS über die hochpotentialige Treiberstufe HSD an das Regelmagnetventil CV für die Hydraulikvorrichtung HP aus. Dabei bildet das Regelmagnetventil CV und die Hydraulikvorrichtung HP einen Teil der Regelstrecke des Regelkreises CLS. Weiterer Bestandteil der Regelstrecke ist ein Messglied bzw. ein Sensor GM zur Strommessung des Ist-Stroms CVS des Regelmagnetventils CV. Dieses Messglied sitzt im eingangseitigen Teilabschnitt des Rückkoppelzweigs FB des digitalen Regelkreises CLS und hängt an der niederpotentialigen Treiberstufe LSD. Das Messglied GM ist hier im Ausführungsbeispiel durch ein Galvanometer gebildet, das die jeweilig vorliegende Spannung am Regelmagnetventil CV über einen bestimmten, elektrischen Widerstand als Maß für den Ist-Strom CVS des Regelmagnetventils CV ermittelt. Es rechnet die gemessenen Spannungswerte nach entsprechender A/D- Wandlung in zugehörige, diskrete Ist-Stromwerte CVS mit Hilfe des ohmschen Gesetzes um. Ggf. kann die Spannungsversorgung des Regelmagnetventils auch mit umgekehrten Potentialen erfolgen.

Die gemessenen, diskreten Ist-Stromwerte CVS werden dann vom Messglied GM an ein adaptives Korrekturfilter KFI im Rückkoppelzweig FB weitergeleitet, dessen Filterzeit dynamisch einstellbar ist. Das Korrekturfilter KFI ist in der Figur 1 durch eine strichpunktierte Umrahmung symbolisiert. Es ist durch ein erstes, langsameres Filter FI1 mit einer größeren statischen Filterzeit FT1 und ein zweites, schnelleres Filter FI2 mit einer geringeren statischen Filterzeit FT2 gebildet. Es gilt also FT1 > FT2. Das erste Filter FI1 sitzt dabei in Rückkoppelrichtung (vom Regelkreisausgang zum Regelkreiseingang betrachtet) in einem ersten Verzweigungsast BR1 des Rückkoppelpfads FB. Parallel dazu ist das zweite Filter FI2 in einem zweiten Verzweigungsast BR2 des Rückkoppelpfads FB angeordnet.

Die Filterzeit FT1 bzw. FT2 des jeweiligen Filters wie z.B. FI1 bzw. FI2 wird vorzugsweise durch die Einschwingzeit dessen Sprungantwort repräsentiert. Sie ist insbesondere diejenige Zeitdauer, in der die Sprungantwort des jeweiligen Filters von 0 dB auf einen konstanten Wert K dB ansteigt. Sie kennzeichnet diejenige Zeitdauer des jeweiligen Filters, die dieses benötigt, auf einen Pegelsprung eines Eingangssignals mit einem entsprechenden Pegelsprung am Ausgang zu reagieren. Je größer die Grenzfrequenz des jeweiligen Filters ist, desto kürzer ist seine Einschwingzeit. Allgemein ausgedrückt ist die Flankensteilheit der Sprungantwort des jeweiligen Filters umso geringer, je größer die Anzahl der Verzögerungsglieder in der Filterstruktur des jeweiligen Filters ist. Damit geht eine größere Einschwingzeit einher. Je kleiner die Anzahl der Verzögerungsglieder in der diskreten Filterstruktur ist, desto steiler sind die Flanken der Sprungantwort des jeweiligen digitalen Korrekturfilters und desto kürzer ist dessen Einschwingzeitdauer. Ein Filter mit einer kurzen Einschwingzeit kann schneller als ein Filter mit einer längeren Einschwingzeit auf einen eingangsseitigen Pegelsprung reagieren und diesem folgen.

Ist das jeweilige Filter beispielsweise als Mittelwertbildner ausgebildet, so wird seine Einzwingzeitdauer durch den Grad seiner Übertragungsfunktion im Frequenzbereich und damit durch die Länge seiner diskreten Impulsantwort bestimmt. Mit anderen Worten ausgedrückt heißt das, dass ein diskretes Filter, das eine diskrete Mittelwertbildung über ein Fenster vorgegebener Breite n T für anstehende Eingangssignale mit der Taktperiode T durchführt, umso langsamer reagiert, je größer die Anzahl n an diskreten Eingangssignalwerten ist, die zur Mittelwertbildung herangezogen werden und insgesamt einen korrigierten diskreten Ausgangswert am Ausgang des Filters ergeben. Umgekehrt weist ein derart Mittelwertbildendes Filter eine umso kleinere Filterzeit auf, je geringer die Anzahl der diskreten Eingangswerte ist, die für die Mittelwertbildung benutzt werden und insgesamt einen gemittelten Ausgangswert generieren. Dies geht mit einer kurzen Einschwingzeit des Filters einher, so dass dieses Filter schneller einem eingangsseitigen Pegelsprung nachfolgen kann.

Anstelle von Mittelwertbildnern für die verschiedenen Filter können für diese in vorteilhafter Weise PT1 oder PT2-Glieder, d.h. Verzögerungsglieder 1. oder 2. Grades, als einfache Tiefpassfilter verwendet sein. Zweckmäßig können auch sonstige Tiefpassfilter sein.

Insbesondere wirkt hier im Ausführungsbeispiel das langsamere Filter FI1 als Glättungsfilter für die Regelgröße CVS, die Störungen durch Bordnetzspannungswelligkeiten weitgehend herausfiltert und weitgehend verhindert, dass diese nicht zum Subtrahierglied DIF weitergeleitet werden.

Mit Hilfe eines Umschaltglieds SW im Rückkoppelzweig FB, das dem adaptiven Korrekturfilter KFI nachgeordnet ist, wird nun entweder der Verzweigungsast BR1 des ersten Filters FI1 oder der Verzweigungsast BR2 des zweiten Filters FI2 in den Rückkoppelzweig FB eingefügt und ist dort für die gemessenen Ist-Stromwerte CVS wirksam, die als Regelgröße des Regelkreises CLS fungieren. Das Umschaltglied SW wird dabei durch eine Analyse-/Steuereinheit DA betätigt. Dazu wertet die Analyse-/Steuereinheit DA die diskreten Sollwertstromwerte SS des Regelkreises CLS, die dessen Vorwärtszweig FP eingangsseitig zugeführt werden, hinsichtlich ihrer Pegeldynamik aus. Die Betätigung der Umschaltvorrichtung SW durch die Analyse-/Steuereinheit DA ist in der Figur 1 durch einen Steuerpfeil bzw. Wirkpfeil SL1 angedeutet.

Stellt die Analyse-/Steuereinheit DA beispielsweise fest, dass der Sollwertstrom SS annäherungsweise konstant verläuft, d.h. einen quasi-statischen Verlauf aufweist, so koppelt sie den Verzweigungsast BR mit dem langsamen, ersten Filter FI1 mittels des Umschaltglieds SW in den Rückkoppelzweig FB ein. Da dieses erste Filter FI1 mit größerer Filterzeit FT1 träge reagiert, ist es gegenüber Störungen der Regelgröße CVS, die durch Bordnetzspannungs-Welligkeiten bzw. -Schwankungen hervorgerufen werden, weitgehend unempfindlich und somit robust. Diese werden auf Grund seiner langen Filterzeit und der größeren Anzahl von gemessenen, diskreten Ist-Stromwerten, die bei der gleitenden Mittelwertbildung berücksichtigt werden, weitgehend herausgemittelt. Auf diese Weise stellt das erste Filter FI1 an seinem Ausgang eine korrigierte Regelgröße CCV bereit, die von Störungen durch Bordnetzspannungs-Schwankungen weitgehend bereinigt ist.

Ermittelt hingegen die Analyse-/Steuereinheit DA, dass der Sollwertstrom SS kurzzeitig eine hohe Pegeldynamik aufweist, so schaltet sie mittels des Umschaltglieds SW den Verzweigungsast BR1 des ersten Filters FI1 im Rückkoppelzweig FB aus und fügt anstelle dessen den Verzweigungsast BR2 des zweiten Filters FI2 mit der kürzeren Filterzeit FT2 in den Rückkoppelzweig FB ein. Das Filter FI2 erlaubt aufgrund seiner geringeren Einschwingzeit, dass die Regelgröße CVS schneller Sprungänderungen des gemessenen Ist-Stroms CVS nachfolgen kann. Denn ein Pegelsprung des Sollwertstroms SS führt ja zu einer größeren Regelabweichung DIS, die der Regler PC in einen Pegelsprung der Stellgröße AS umsetzt. Dies führt zu einer sprungsartigen Erhöhung des elektrischen Spulenstroms I des Regelmagnetventils CV, was wiederum einen Sprung im gemessenen Ist-Strom CVS nach sich zieht. Durch das schnell reagierende Korrekturfilter FI2 ist somit dem Regler PC ermöglicht, schnell einen gewünschten Pegelsprung des Sollwertsstroms SS in einen korrespondierenden Pegelsprung des Ist-Stroms I im Regelmagnetventil CV umzusetzen. Der gesamte Regelkreis CLS hat in diesem Fall eine hohe Dynamik, d.h. ein schnelles Ansprechverhalten auf gewünschte Änderungen des Sollwertstromverlaufs SS.

Die Figur 2 veranschaulicht anhand eines Stromdiagramms, wie die dynamische Umschaltung zwischen den beiden Filtern FI1, FI2 mit ihren voneinander verschiedenen Filterzeiten FT1, FT2 in Abhängigkeit von Pegeländerungen des eingangsseitigen Sollwertstroms SS erfolgt. Entlang der Abszisse des Stromdiagramms ist die Zeit t, entlang deren Ordinaten sind Stromwerte i aufgetragen. Der zeitliche Verlauf des Sollwertstroms SS ist mit Hilfe einer durchgezogenen Linie gekennzeichnet. Er verläuft zunächst im Zeitraum von $t_0$ bis Zeitpunkt $t_x$ im Wesentlichen mit dem konstanten Wert U1. Zum Zeitpunkt $t_x$ springt er um einen Stromänderungswert ΔS1 auf einen neuen, höheren Pegelwert O1 und behält diesen für eine vorgebbare Zeitdauer bei. Der im wesentlichen konstante Verlauf auf dem Niveau des unteren Sollstromwerts U1 zwischen dem Zeitpunkt $t_0$ bis zum Zeitpunkt $t_x$ ist in der Figur 2 mit UK, der im wesentlichen konstante Stromverlauf auf dem höheren Pegelniveau O1 nach dem Zeitpunkt tx ist dort mit OK bezeichnet. Die Sprungstelle zwischen dem unteren konstanten Sollstromverlauf UK und dem oberen Sollstromverlauf OK ist in der Figur 2 mit dem Bezugszeichen ST versehen. Die Analyse-/Steuereinheit DA vor dem Subtrahierer DIF am Eingang des Regelkreises CLS beobachtet entsprechend dem Regelungstakt des Regelkreises CLS das Pegelverhalten des Sollwertstroms SS. Solange die Analyse-/Steuereinheit DA feststellt, dass Pegeländerungen des Sollwertstroms SS unterhalb einem vorgebbaren Schwellwert ΔL liegen, steuert sie den Umschalter SW im Rückkoppelzweig FB derart, dass das langsamere Korrekturfilter FI1 mit der größeren Filterzeit FT1 aktiv geschaltet ist. Dann können Störungen auf der Regelgröße CVS, die von Schwankungen der Bordnetzspannung herrühren, herausgefiltert, insbesondere herausgemittelt werden, so

**EP 2 001 711 B1**

dass Fehlregelungen des digitalen Reglers PC weitgehend vermieden sind. Die Störungen, mit denen der elektrische Spulenstrom I des Regelmagnetventils CV durch Schwankungen der Bordnetzspannungen beaufschlagt wird, sind in der Figur 1 durch einen Störpfeil DSS angedeutet. Hier im Ausführungsbeispiel von Figur 2 ist das langsamere Filter FI1 während des im Wesentlichen konstanten Pegelverlaufs UK im Rückkoppelzweig FB aktiviert. In der Figur 2 sind die oberen und unteren Pegelschwankungsgrenzen, um die der Sollstromwert U1 bei einem vorgegebenen Schwellwert $\Delta$L variieren darf, um von der Analyse-/Steuereinheit DA als im Wesentlichen stationär bzw. statisch bewertet zu werden, strichpunktiert eingezeichnet und mit dem Bezugszeichen ED1 versehen.

Sobald die Analyse-/Steuereinheit DA ermittelt, dass sich der Sollstrom SS um mehr als den Schwellwert $\Delta$L ändert, wie hier zum Zeitpunkt $t_x$, schaltet sie den Verzweigungsast BR1 mit dem langsameren Filter FI1 im Rückkoppelzweig FB mit Hilfe des Umschaltglieds SW aus und dafür dort den Verzweigungsast BR2 mit dem schnelleren Korrekturfilter FI2 ein. Kommt es zur Sollwertänderung $\Delta$S1 des Sollwertstroms SS, so schlägt sich dieses in einer korrespondierenden Änderung der Regelgröße CVS nieder. Die Pegeländerung der Regelgröße CVS wird nun durch das schnellere Filter FI2 im Wesentlichen hindurchgelassen und gelangt somit zum Subtrahierglied DIF. Es kommt daraufhin zu einer stärkeren Änderung der Regelabweichung DIS, so dass der digitale Regler PC unmittelbar nach einer Totzeit $t_t$ auf den gewünschten höheren Sollstromwert O1 ausregeln kann. In der Figur 2 ist der zeitliche Verlauf des gemessenen Ist-Stroms CVS, der im Regelmagnetventil CV eingestellt wird, zusätzlich gestrichelt eingezeichnet. Der Regelkreis CLS regelt sich nach einem geringen Überschwingen innerhalb der Zeit $t_e$-$t_x$ auf den neuen gewünschten Sollstromwert O1 ein. Ab dem Zeitpunkt $t_e$ ändert sich der Strompegel des Ist-Stroms CVS kaum noch und verläuft im Wesentlichen stabil mit dem gewünschten Sollwertstromverlauf OK. In der Analyse-/Steuereinheit DA wird ab dem Zeitpunkt $t_x$, zu dem die Pegeländerungen des Sollwertstroms SS den vorgegebenen Schwellwert $\Delta$L überschreiten, ein Zeitnehmer bzw. Timer gestartet, der eine Zeitdauer zum Ausregeln des Ist-Stroms CVS auf den gewünschten neuen Sollstromwert 01 festlegt. In der Analyse-/Steuereinheit DA werden für die Änderungen des Sollwertstroms SS ab dem Zeitpunkt $t_x$ des Stromsprungs $\Delta$S1 bis zum Ausregelzeitpunkt $t_e$ trichterförmig zulaufende Bandgrenzen ED2 festgelegt. Solange sich der Sollwertstrom SS innerhalb dieser trichterförmigen Bandgrenzen ED2 bewegt, bleibt das schnellere Filter FI2 aktiviert.

Ab dem Zeitpunkt $t_e$, ab dem der Regelkreis CLS auf den neuen Sollstromwert O1 ausgeregelt ist, wird von der Analyse-/Steuereinheit DA analysiert, ob der vorgegebene Schwellwert $\Delta$L durch die Pegeldynamik des Sollwertstrom SS unterschritten wird. Dies ist hier im Ausführungsbeispiel ab dem Zeitpunkt $t_e$ der Fall. Daraufhin aktiviert die Analyse-/Steuereinheit DA mittels des Umschaltglieds SW wieder das langsamere Filter FI1 mit der längeren Filterzeit FT1. Auf diese Weise können ab dem statischen Verhalten des Regelkreises wiederum Störungen der Regelgröße CVS, die durch Schwankungen der Bordnetzspannung bedingt sind, durch das Korrekturfilter FI1 herausgefiltert werden, so dass das Regelverhalten des Regelkreises CLS von diesen Störungen weitgehend unbeeinträchtigt bleibt. Damit werden unerwünschte, unnötige Regelvorgänge durch derartige Störungen weitgehend vermieden. Der Regelkreis CLS stellt somit den Ist-Strom I im Regelmagnetventil stabil auf den gewünschten Sollwertstrom SS ein.

Ggf. kann es auch zweckmäßig sein, mehr als zwei verschieden schnelle Filter mit mehreren zugeordneten Schwellwerten als Filterbank vorzusehen. Diese mehreren Korrekturfilter sind vorzugsweise parallel zueinander im Rückkoppelzweig FB angeordnet und werden mit Hilfe eines Mehrfachumschalters dann jeweils aktiv geschaltet, wenn ihr jeweiliger Schwellwert von der ermittelten Pegeländerung des Sollwertstroms überschritten wird.

Alternativ kann es ggf. auch zweckmäßig sein, anstelle von zwei separaten, statischen Filtern FI1, FI2 lediglich ein einziges Korrekturfilter im Rückkoppelzweig FD vorzusehen, dessen Filterzeit dynamisch in Abhängigkeit von Änderungen des Sollwertstroms SS dynamisch variierbar, insbesondere schrittweise durchstimmbar ist. Insbesondere kann als Steuerparameter für die Filterzeit des einzelnen Korrekturfilters KFI der sogenannte D- Anteil der Stellgröße AS des digitalen Reglers PC herangezogen werden. Dies ist in der Figur 1 durch einen strichpunktierten Pfeil D zwischen dem Regler PC und dem adaptiven Korrekturfilter KFI angedeutet. Der D-Anteil D des Stellgrößensignals AS z.B. eines PID-Reglers ermittelt sich vorzugsweise nach folgender Beziehung:

$$\text{D-Anteil D} = C_D (e_{neu} - e_{alt})/\Delta t,$$

wobei $C_D$ ein Koeffizient,
$e_{neu}$ die Regelabweichung im aktuellen Regelzyklus r,
$e_{alt}$ die Regelabweichung im vorherigen Regelzyklus r-1,
$\Delta t$ die Zeitdauer zwischen vorherigem und aktuellem Regelzyklus ist. Insbesondere ist es dabei zweckmäßig, den ermittelten D-Anteil D nach oben und nach unten zu begrenzen. In der Figur 1 ist im Regler PC ein Begrenzer TU strichpunktiert angedeutet, der den D-Anteil D auf eine untere und/oder obere Schwelle T2, T1 begrenzt.
Dadurch werden für die Filterzeit des adaptiven Korrekturfilters eine obere und eine untere Schranke festgelegt, d.h. zwischen der oberen und der unteren Schranke kann die Filterzeit variabel eingestellt werden.

Vorzugsweise wird ein begrenzter D-Anteil $F_D$ nach der Beziehung

$$F_D=(\min(10mA/msec, \max(50mA/ms,|D|))\ \frac{ms}{50mA}$$

ermittelt.

Durch den letzten Faktor $\frac{ms}{50mA}$ wird eine Skalierung bzw.

Normierung des begrenzten D-Anteils $F_D$ auf Werte zwischen 0 und 1 vorgenommen. Das Korrekturfilter KFI ermittelt nun aus diesem D-Anteil FD mit Hilfe der Ist-Stromwerte CVS aus dem vorherigen Regelzyklus r-1 und dem aktuellen Regelzyklus r eine korrigierte Regelgröße CCV:

$$CCV=\ F_D\ CVS(r)\ +\ (1-FD)\ CVS(r-1),$$

wobei r eine fortlaufende natürliche Zahl ist.

Je kleiner der differentielle Anteil in Form des modifizierten D-Anteils $F_D$ des Stellgrößensignals AS ist, desto stärker wird der vorherige Ist-Stromwert aus dem letzten Regelzyklus r-1 gewichtet. Je größer der differentielle Anteil $F_D$ ist, desto stärker fällt der Ist-Stromwert CVS(r) des aktuellen Regelzyklus r ins Gewicht und desto weniger wird der vorherige Ist-Stromwert CVS(r-1) aus dem vorherigen Regelzyklus r-1 berücksichtigt. Selbstverständlich ist es auch möglich, bei der Ermittlung des D-Anteils D bzw. des begrenzten D-Anteils FD zur Generierung der korrigierten Regelgröße CCV mehr als zwei Regelzyklen zu berücksichtigen.

Die Figur 3 veranschaulicht, wie beim selben Sollwertstromverlauf SS wie in Figur 2 eine dynamische Änderung der Filterzeit des einzelnen adaptiven Korrekturfilters KFI mit Hilfe des D-Anteils des Stellgrößensignals AS des Reglers PC durchgeführt wird. Der zeitliche Verlauf von Änderungen des D-Anteils D des Stellgrößensignals AS ist in der Figur 3 strichpunktiert eingezeichnet.

Zusammenfassend betrachtet ist also mindestens ein Korrekturfilter im Rückkoppelzweig hinsichtlich seiner Filterzeit dynamisch einstellbar. Während den gewünschten Schaltungen bzw. Änderungen des Sollwertstroms wird eine kürzere Filterzeit gewählt, um den Anforderungen an die Dynamik des Reglers gerecht zu werden. Im statischen Zustand, d.h. solange sich der Sollwertstrom innerhalb von eng vorgegebenen Grenzen oder gar nicht ändert, wird die Filterzeit des mindestens einen Korrekturfilters entsprechend groß gewählt, um den Einfluss von Störungen, die auf Schwankungen der Bordnetzspannung zurückgehen, möglichst aus der Regelgröße herauszufiltern.

Insbesondere kann es bei der Ausführungsvariante entsprechend den Figuren 1 und 2 zweckmäßig sein, den Stromregler PC in der Vorwärtsstrecke des Regelkreises CLS dadurch zu realisieren, dass der Stromregler PC das Tastverhältnis eines PWM(Pulsweitenmodulierten)-Signals als Stellgröße AS verändert. Dieses taktet seinerseits über den Endstufentreiber HSD (siehe Figur 1) die Versorgungsspannung des Regelmagnetventils CV und regelt dadurch den Strom I durch das Regelmagnetventil CV. Der Strom I wird über einen Messwiderstand des Messsensors GM gemessen und als Ist-Strom, d.h. als Regelgröße CVS über den Rückkoppelzweig FB zum Subtrahierer DIF am Eingang der Vorwärtsstrecke FP des Regelkreises CLS zurückgeführt. Dort wird die Differenz zwischen dem Sollstrom SS und dem Ist-Strom CVS als Regelabweichung DIS ermittelt. Die Regelabweichung DIS wird als Eingangsgröße an den digitalen Regler PC, insbesondere PID Regler, gegeben. Das PWM-Signal der Stellgröße AS hat dabei vorzugsweise eine konstante Frequenz. Falls sich die Summe der Sollstromänderungen innerhalb einer Zeit t, die insbesondere der typischen Einregelzeit des Regelkreises, hier insbesondere in etwa 30ms, entspricht, um weniger als den Schwellwert $\Delta$L ändert, wird der gemessene Ist-Strom CVS mittels eines langsameren bzw. trägeren Filters wie z.B. FI1 in Figur 1 gefiltert. Der Schwellwert $\Delta$L kann in der Praxis zweckmäßigerweise gleich etwa 25mA gewählt werden. Das träge Filter FI1 bildet hier im Ausführungsbeispiel von Figur 1 und Figur 2 vorzugsweise einen gleitenden Mittelwert über 6 PWM-Perioden. Hat sich der Sollstrom innerhalb der Zeit t um mehr als der vorgegebene Schwellwert $\Delta$L geändert, wird das schnellere Filter FI2 aktiviert, um eine große Dynamik des Reglers bewirken zu können. Das schnellere Filter bildet hier im Ausführungsbeispiel von Figur 1 und Figur 2 zum Beispiel lediglich den Mittelwert über eine einzelne PWM-Periode.

Vorteilhaft kann es weiterhin sein, anstatt des Schwellwerts eines einzelnen schnellen Filters mehrere Schwellwerte zu wählen, die mehreren schnellen Filtern zugeordnet sind.

Darüber hinaus kann es entsprechend der Ausführungsvariante von Figur 3 insbesondere auch zweckmäßig sein, lediglich ein einzelnes adaptives Korrekturfilter vorzusehen, dessen Filterzeit durch eine Funktion abhängig von Sollwertänderungen des Sollwertstroms dynamisch eingestellt, d.h. variiert wird.

Vorteilhaft ist durch diese dynamische Einstellung der Filterzeit von ein oder mehreren Korrekturfiltern, dass bei Sollwertsprüngen des Sollwertstroms eine schnelle Sprungantwort des Regelkreises generiert wird und gleichzeitig bei einem stabilen Verhalten des Sollwertsstroms etwaige Störungen, die von Bordnetzwelligkeiten herrühren, durch das Umschalten auf mindestens ein Filter mit trägem Filterverhalten herausgefiltert werden können. Der Regelkreis verhält sich dann im Wesentlichen stabil und somit vergleichbar dem Verhalten mit einem dauerhaft trägen, d.h. stationären Filter in seinem Rückkoppelzweig. Hochfrequente Störschwingungen, die dem Regelgrößensignal überlagert sind, werden also weitgehend unterdrückt und gehen nicht mehr in die Ermittlung der Regelabweichung ein.

**Patentansprüche**

1. Kraftfahrzeug-Steuergerät (CO) mit einem digitalen Regelkreis (CLS) zur Bordnetzwelligkeit- robusten Regelung des elektrischen Stroms (I) eines Regelmagnetventils (CV) für eine Kraftfahrzeug- Hydraulikvorrichtung (HP) bei gleichzeitig verbessertem Dynamikverhalten auf Sollwertsprünge (ST) des Sollwertstroms (SS) als Führungsgröße des Regelkreises (CLS),
   **dadurch gekennzeichnet,**
   **dass** im Rückkoppelzweig (FB) des digitalen Regelkreises (CLS) mindestens ein adaptives Korrekturfilter (KFI) vorgesehen ist, dessen Filterzeit (FT1, FT2) aufgrund der Pegeländerung (ΔS1) des Sollwertstroms (SS) dynamisch einstellbar ist.

2. Kraftfahrzeug-Steuergerät nach Anspruch 1,
   **dadurch gekennzeichnet,**
   **dass** die Filterzeit (FT1) bei im Wesentlichen konstantem Pegel (UK, OK) oder bei kleineren Pegeländerungen (ΔL) des Sollwertstroms (SS) zur Reduzierung von Störungen (DSS) des elektrischen Stroms (I) aufgrund von Bordnetzspannungs-Welligkeiten länger als bei größeren Pegeländerungen (ΔS1) des Sollwertstroms (SS) eingestellt ist.

3. Kraftfahrzeug-Steuergerät nach einem der vorhergehenden Ansprüche,
   **dadurch gekennzeichnet,**
   **dass** das adaptive Korrekturfilter (KFI) durch mindestens ein erstes stationäres Filter (FI1) und mindestens ein zweites stationäres Filter (FI2) gebildet ist, und dass die Filterzeit (FT1) des ersten Filters (FI1) größer als die Filterzeit (FT2) des zweiten Filters (FI2) gewählt ist, so dass das erste Filter (FI1) langsamer als das zweite Filter (FI2) ist.

4. Kraftfahrzeug-Steuergerät nach Anspruch 3,
   **dadurch gekennzeichnet,**
   **dass** vor dem Subtrahierglied (DIF) des Regelkreises (CLS), das der Ermittlung dessen Regelabweichung (DIS) dient, zur Beobachtung der Pegeldynamik des Sollwertstroms (SS) eine Analyse-/Steuereinheit (DA) vorgesehen ist, die mittels eines Umschaltglieds (SW) lediglich das erste Filter (FI1) mit der größeren Filterzeit (FT1) bei einer geringeren Pegeldynamik (SS<ΔL) des Sollwertstroms (SS) und lediglich das zweite Filter (FI2) mit der geringeren Filterzeit (FT2) bei einer größeren Pegeldynamik (SS>ΔL) des Sollwertstroms (SS) im Rückkoppelzweig (FB) aktiv schaltet.

5. Kraftfahrzeug-Steuergerät nach Anspruch 4,
   **dadurch gekennzeichnet,**
   **dass** das erste Filter (FI1) mit der größeren Filterzeit (FT1) dann im Rückkoppelzweig (FB) wirksam geschaltet ist, wenn die Pegeländerungen des Sollwertstroms (SS) eine vorgebbare Schwelle (SS<ΔL) unterschreiten, und dass das zweite Filter (FI2) mit der geringeren Filterzeit (FT2) im Rückkoppelzweig (FB) wirksam ist, wenn die Pegeländerungen des Sollwertstroms (SS) den vorgegebenen Schwellwert (SS>ΔL) überschreiten.

6. Kraftfahrzeug-Steuergerät nach einem der Ansprüche 3 mit 5,
   **dadurch gekennzeichnet,**
   **dass** das erste Filter (FI1) sowie das zweite Filter (FI2) jeweils als diskreter, zeitlicher Mittelwertbildner für den gemessenen Ist-Strom des Regelmagnetventils (CV), der die Regelgröße (CVS) des Regelkreises CLS) bildet, ausgebildet ist.

7. Kraftfahrzeug-Steuergerät nach einem der Ansprüche 3 mit 5,
   **dadurch gekennzeichnet,**
   **dass** das erste Filter (FI1) und das zweite Filter (FI2) jeweils als ein Tiefpassfilter, insbesondere als ein PT1- oder PT2-Glied, ausgebildet ist.

8. Kraftfahrzeug-Steuergerät nach einem der Ansprüche 1 oder 2,
   **dadurch gekennzeichnet,**
   **dass** die Filterzeit des adaptiven Korrekturfilters (KFI) durch den D-Anteil (D) des Stellsignals (AS) des digitalen Reglers (PC) des Regelkreises (CLS) steuerbar ist.

9. Kraftfahrzeug-Steuergerät nach Anspruch 8,
   **dadurch gekennzeichnet,**
   **dass** im Regler (PC) ein Begrenzer (TU) vorgesehen ist, der den D-Anteil (D) auf eine untere und/oder obere Schwelle (T2, T1) begrenzt.

10. Kraftfahrzeug-Steuergerät nach einem der Ansprüche 8 oder 9,
    **dadurch gekennzeichnet,**
    **dass** das adaptive Korrekturfilter (KFI) im Rückkoppelzweig (FB) derart ausgebildet ist, dass es mit Hilfe des D-Anteils (D) eine korrigierte Regelgröße (CCV) ermittelt, die mindestens einen Ist-Stromwert (CV(r)) des aktuellen Regelzyklus und zusätzlich mindestens einen Ist-Stromwert (CV(r-1)) mindestens eines vorausgehenden Regelzyklus umso stärker berücksichtigt, desto kleiner der D-Anteil (D) ist.

11. Kraftfahrzeug-Steuergerät nach einem der vorhergehenden Ansprüche,
    **dadurch gekennzeichnet,**
    **dass** die Kraftfahrzeug-Hydraulikvorrichtung (HP) durch mindestens eine Kupplung und/oder mindestens eine Hydraulikbremse gebildet ist.

12. Kraftfahrzeug-Steuergerät nach einem der vorhergehenden Ansprüche,
    **dadurch gekennzeichnet,**
    **dass** der Regler (PC) des Regelkreises (CLS) als PID-Regler ausgebildet ist.

13. Verfahren zur Reduzierung des Einflusses von Bordnetzspannungs-Welligkeiten auf die Regelung des elektrischen Stroms (I) eines Regelmagnetventils (CV) im digitalen Regelkreis (CLS) eines Steuergeräts (CO) für eine Kraftfahrzeug-Hydraulikvorrichtung (HP) bei gleichzeitig verbessertem Dynamikverhalten auf Sollwertsprünge (ST) des Sollwertstroms (SS) als Führungsgröße des Regelkreises (CLS), insbesondere nach einem der vorhergehenden Ansprüche,
    **dadurch gekennzeichnet,**
    **dass** im Rückkoppelzweig (FB) des digitalen Regelkreises (CLS) die Filterzeit (FT1, FT2) mindestens eines adaptiven Korrekturfilters (KFI) aufgrund der Pegeländerung ($\Delta$S1) des Sollwertstroms (SS) dynamisch eingestellt wird.

14. Verfahren nach Anspruch 13,
    **dadurch gekennzeichnet,**
    **dass** im Rückkoppelzweig (FB) des digitalen Regelkreises (CLS) die Filterzeit mindestens eines Filters (KFI) derart dynamisch durch die Pegeldynamik des Sollwertsstroms (SS) des Reglers (PC) des Regelkreises (CLS) eingestellt wird, dass die Filterzeit (FT1) des Filters (KFI) zur Reduzierung von Störungen des elektrischen Stroms (I) aufgrund von Bordnetzspannungs-Welligkeiten bei einer geringeren Pegeldynamik (SS<$\Delta$L) des eingangsseitig zugeführten Sollwertsstroms (SS) größer als bei einer größeren Pegeldynamik (SS>$\Delta$L) des Sollwertsstroms (SS) gewählt wird, und dass bei einer höheren Pegelwertdynamik (SS>$\Delta$L) des Sollwertstroms (SS) die Filterzeit (FT2) zur Erhöhung der Schnelligkeit des Ausregelverhaltens des Reglers (PC) geringer als bei einer geringeren Pegeldynamik des Sollwertstroms (SS) gewählt wird.

## Claims

1. Motor vehicle control unit (CO) having a digital closed loop system (CLS) for controlling the electric current (I) of a solenoid control valve (CV) for a motor vehicle hydraulic device (HP) in a manner that is robust with respect to the vehicle electrical system voltage ripple with simultaneously improved dynamic behaviour in response to jumps (ST) in the setpoint value current (SS) as a reference variable of the closed loop system (CLS),
   **characterised in that**
   at least one adaptive correction filter (KFI) whose filter time (FT1, FT2) can be set dynamically based on the level change ($\Delta$S1) of the setpoint value current (SS) is provided in the feedback branch (FB) of the digital closed loop system (CLS).

2. Motor vehicle control unit according to claim 1,
**characterised in that**
the filter time (FT1) is set longer in the case of an essentially constant level (UK, OK) or in the case of minor level changes ($\Delta$L) in the setpoint value current (SS) for the purpose of reducing interferences (DSS) of the electric current (I) caused by vehicle electrical system voltage ripple than in the case of major level changes ($\Delta$S1) of the setpoint value current (SS).

3. Motor vehicle control unit according to one of the preceding claims,
**characterised in that**
the adaptive correction filter (KFI) is formed by at least one first stationary filter (FI1) and at least one second stationary filter (FI2), and that the filter time (FT1) of the first filter (FI1) is chosen to be greater than the filter time (FT2) of the second filter (FI2) such that the first filter (FI1) is slower than the second filter (FI2).

4. Motor vehicle control unit according to claim 3,
**characterised in that**
for the purpose of observing the level dynamics of the setpoint value current an analysis/control unit (DA) is provided upstream of the subtracting element (DIF) of the closed loop system (CLS) that serves for determining the latter's control deviation (SS), said analysis/control unit (DA) activating by means of a switchover element (SW) only the first filter (FI1) with the longer filter time (FT1) in the event of a smaller level dynamic response (SS<$\Delta$L) of the setpoint value current (SS) and only the second filter (FI2) with the shorter filter time (FT2) in the event of a greater level dynamic response (SS>$\Delta$L) of the setpoint value current (SS) in the feedback branch (FB).

5. Motor vehicle control unit according to claim 4,
**characterised in that**
the first filter (FI1) with the longer filter time (FT1) is switched to active in the feedback branch (FB) if the level changes in the setpoint value current (SS) undershoot a predefinable threshold (SS<$\Delta$L), and that the second filter (FI2) with the shorter filter time (FT2) is active in the feedback branch (FB) if the level changes in the setpoint value current (SS) exceed the predefined threshold value (SS>$\Delta$L) .

6. Motor vehicle control unit according to one of claims 3 to 5,
**characterised in that**
the first filter (FI1) and the second filter (FI2) are each embodied as a discrete time averager for the measured actual current of the solenoid control valve (CV) which forms the control variable (CVS) of the closed loop system (CLS).

7. Motor vehicle control unit according to one of claims 3 to 5, **characterised in that**
the first filter (FI1) and the second filter (FI2) are each embodied as a low-pass filter, in particular as a PT1 or PT2 element.

8. Motor vehicle control unit according to one of claims 1 or 2, **characterised in that**
the filter time of the adaptive correction filter (KFI) is controllable by means of the D component (D) of the actuating signal (AS) of the digital controller (PC) of the closed loop system (CLS).

9. Motor vehicle control unit according to claim 8,
**characterised in that**
in the controller (PC) there is provided a limiter (TU) which limits the D component (D) to a lower and/or an upper threshold (T2, T1).

10. Motor vehicle control unit according to one of claims 8 or 9, **characterised in that**
the adaptive correction filter (KFI) in the feedback branch (FB) is embodied such that with the aid of the D component (D) it determines a corrected control variable (CCV) which takes into account at least one actual current value (CV(r)) of the current control cycle and in addition at least one actual current value (CV(r-1)) of at least one preceding control cycle all the more heavily, the smaller the D component (D) is.

11. Motor vehicle control unit according to one of the preceding claims,
**characterised in that**
the motor vehicle hydraulic device (HP) is formed by means of at least one clutch and/or at least one hydraulic brake.

**EP 2 001 711 B1**

**12.** Motor vehicle control unit according to one of the preceding claims,
**characterised in that**
the controller (PC) of the closed loop system (CLS) is embodied as a PID controller.

**13.** Method for reducing the effect of vehicle electrical system voltage ripple on the control of the electric current (I) of a solenoid control valve (CV) in the digital closed loop system (CLS) of a control unit (CO) for a motor vehicle hydraulic device (HP) with simultaneously improved dynamic behaviour in response to setpoint value jumps (ST) of the setpoint value current (SS) as a reference variable of the closed loop system (CLS), in particular as claimed in one of the preceding claims,
**characterised in that**
the filter time (FT1, FT2) of at least one adaptive correction filter (KFI) in the feedback branch (FB) of the digital closed loop system (CLS) is set dynamically based on the level change (ΔS1) of the setpoint value current (SS).

**14.** Method according to claim 13,
**characterised in that**
the filter time of at least one filter (KFI) in the feedback branch (FB) of the digital closed loop system (CLS) is set dynamically by means of the level dynamics of the setpoint value current (SS) of the controller (PC) of the closed loop system (CLS) such that the filter time (FT1) of the filter (KFI) is chosen to be greater for the purpose of reducing interferences of the electric current (I) due to vehicle electrical system voltage ripple in the case of a smaller level dynamic response (SS<ΔL) of the setpoint value current (SS) supplied on the input side than in the case of a greater level dynamic response (SS>ΔL) of the setpoint value current (SS), and that in the case of a higher level value dynamic response (SS>ΔL) of the setpoint value current (SS) the filter time (FT2) is chosen to be smaller for the purpose of increasing the speed of the correction behaviour of the controller (PC) than in the case of a smaller level dynamic response of the setpoint value current (SS).

**Revendications**

**1.** Appareil de commande (CO) pour véhicule automobile comprenant un circuit numérique de régulation (CLS) destiné à régler, de manière à être à l'abri des ondulations du réseau de bord, le courant électrique (I) d'une soupape magnétique de régulation (CV) pour un dispositif hydraulique (HP) du véhicule automobile, en présence également d'un comportement dynamique amélioré vis-à-vis des sauts de la valeur de consigne (ST) du courant de valeur de consigne (SS) utilisé comme grandeur pilote du circuit de régulation (CLS),
**caractérisé en ce qu'**
au moins un filtre adaptatif de correction (KFI) est prévu dans la branche de réaction (FB) du circuit de régulation numérique (CLS), la constante de temps (FT1, FT2) de ce filtre étant réglable de façon dynamique en fonction de la variation de niveau (ΔS1) du courant de valeur de consigne (SS).

**2.** Appareil de commande pour véhicule automobile selon la revendication 1,
**caractérisé en ce que**
en présence d'un niveau essentiellement constant (UK, OK) ou de variations de niveau faibles (ΔL) du courant de valeur de consigne (SS), la constante de temps (FT1) du filtre est réglée à une valeur plus longue qu'en présence de variations de niveau importantes (ΔS1) du courant de valeur de consigne (SS), dans le but de réduire les perturbations (DSS) du courant électrique (I) dues aux ondulations de la tension du réseau de bord.

**3.** Appareil de commande pour véhicule automobile selon l'une des revendications précédentes,
**caractérisé en ce que**
le filtre adaptatif de correction (KF1) est formé d'au moins un premier filtre stationnaire (FI1) et d'au moins un second filtre stationnaire (FI2) et **en ce que** la constante de temps (FT1) du premier filtre (FI1) est choisie plus grande que la constante de temps (FT2) du second filtre (FI2) de sorte que le premier filtre (FI1) est plus lent que le second filtre (FI2) .

**4.** Appareil de commande pour véhicule automobile selon la revendication 3,
**caractérisé en ce qu'**
en amont de l'élément de soustraction (DIF) du circuit de régulation (CLS) servant à déterminer l'écart de réglage (DIS) de celui-ci, il est prévu, afin d'observer la dynamique de niveau du courant de valeur de consigne (SS), une unité d'analyse/commande (DA) qui, par l'intermédiaire d'un organe de commutation (SW), rend actif dans la branche de réaction (FB) seulement le premier filtre (FI1) présentant la constante de temps plus grande (FT1) dans le cas où la dynamique de niveau (SS<ΔL) du courant de valeur de consigne (SS) est faible, et seulement le second filtre (FI2) présentant la constante de temps (FT2) plus petite dans le cas où la dynamique de niveau (SS>ΔL) du courant de valeur de consigne (SS) est importante.

5. Appareil de commande pour véhicule automobile selon la revendication 4,
**caractérisé en ce que**
le premier filtre (FI1) présentant la constante de temps plus grande (FT1) est inséré pour être actif dans la branche de réaction (FB), lorsque les variations de niveau du courant de valeur de consigne (SS) dépassent vers le bas un seuil prédéterminable (SS<ΔL), et **en ce que** le second filtre (FI2) présentant la constante de temps plus faible (FT2) est actif dans la branche de réaction (FB), lorsque les variations de niveau du courant de valeur de consigne (SS) dépassent vers le haut la valeur de seuil (SS>ΔL) prédéterminée.

6. Appareil de commande pour véhicule automobile selon l'une des revendications 3 et 5,
**caractérisé en ce que**
le premier filtre (FI1) ainsi que le second filtre (FI2) sont chacun réalisés sous la forme d'un élément temporel et discret de formation de valeur moyenne du courant instantané mesuré de la soupape magnétique de régulation (CV), cet élément formant la grandeur de réglage (CVS) du circuit de régulation (CLS).

7. Appareil de commande pour véhicule automobile selon les revendications 3 et 5,
**caractérisé en ce que**
le premier filtre (FI1) et le second filtre (FI2) sont chacun réalisés sous la forme d'un filtre passe-bas, en particulier sous la forme d'un élément PT1 ou d'un élément PT2.

8. Appareil de commande pour véhicule automobile selon l'une des revendications 1 ou 2,
**caractérisé en ce que**
la constante de temps du filtre adaptatif de correction (KF1) peut être commandé par la composante D (D) du signal de régulation (AS) du régulateur numérique (PC) du circuit de régulation (CLS).

9. Appareil de commande pour véhicule automobile selon la revendication 8,
**caractérisé en ce qu'**
un limiteur (TU) est prévu dans le régulateur (PC) pour limiter la composante D (D) à un seuil inférieure et/ou à un seuil supérieur (T2, T1).

10. Appareil de commande pour véhicule automobile selon l'une des revendications 8 ou 9,
**caractérisé en ce que**
le filtre adaptatif de correction (KFI) dans la branche de réaction (FB) est réalisé de telle façon qu' à l'aide de la composante D (D), il détermine une grandeur de régulation corrigée (CCV) qui prend d'autant plus en compte au moins une valeur de courant instantané (CV(r)) du cycle instantané de régulation et de plus au moins une valeur de courant instantané (CV(r-1)) d'au moins un cycle de régulation précédent, que la composante D (D) est plus faible.

11. Appareil de commande pour véhicule automobile selon l'une des revendications précédentes,
**caractérisé en ce que**
le dispositif hydraulique (HP) du véhicule automobile est formé d'au moins un accouplement et /ou d'au moins un frein hydraulique.

12. Appareil de commande pour véhicule automobile selon l'une des revendications précédentes,
**caractérisé en ce que**
le régulateur (PC) du circuit de régulation (CLS) est réalisé sous la forme d'un régulateur PID.

13. Procédé pour réduire l'influence d'ondulations de la tension du réseau de bord sur la régulation du courant électrique (I) d'une soupape magnétique de régulation (CV) dans le circuit de régulation numérique (CLS) d'un appareil de commande (CO) pour un dispositif hydraulique (HP) d'un véhicule automobile avec une amélioration concomitante du comportement dynamique vis-à-vis des sauts de la valeur de consigne (ST) du courant de valeur de consigne (SS) constituant la grandeur pilote du circuit de régulation (CLS), en particulier selon l'une des revendications précédentes,
**caractérisé en ce que**
on règle de façon dynamique la constante de temps (FT1, FT2) d'au moins un filtre de correction adaptatif (KF1) dans la branche de réaction (FB) du circuit de régulation numérique(CLS) en fonction de la variation de niveau

($\Delta$S1) du courant de valeur de consigne (SS).

14. Procédé selon la revendication 13,
   **caractérisé en ce que**
   dans la branche de réaction (FB) du circuit de régulation numérique (CLS), on règle dynamiquement la constante de temps d'au moins un filtre (KFI) par la dynamique de niveau du courant de valeur de consigne (SS) du régulateur (PC) du circuit de régulation (CLS) de telle façon qu'en vue de la réduction de perturbations du courant électrique (I) dues à des ondulations de la tension du réseau de bord, la constante de temps (FT1) du filtre (KFI) est choisie plus grande en présence d'une dynamique de niveau faible (SS<$\Delta$L) du courant de valeur de consigne (SS) envoyé à l'entrée, qu'en présence d'une dynamique de niveau importante (SS>$\Delta$L) du courant de valeur de consigne (SS), et **en ce que** dans le cas d'une dynamique de niveau importante (SS>$\Delta$L) du courant de valeur de consigne (SS), on choisit la constante de temps (FT2) plus faible que dans le cas d'une faible dynamique de niveau du courant de valeur de consigne afin d'augmenter la rapidité du processus de régulation du régulateur (PC).

# FIG 1

# FIG 2

# FIG 3

**EP 2 001 711 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

• EP 1229273 A